# EUROPÄISCHE PATENTSCHRIFT

(11) **EP 0 807 637 B1**
(45) Veröffentlichungstag und Bekanntmachung des Hinweises auf die Patenterteilung: **13.02.2002**
(21) Anmeldenummer: 97107705.2
(22) Anmeldetag: 12.05.1997
(51) Int. Cl.: C07F 9/50, C07F 9/40, C07F 9/32, B01J 31/16, C07B 37/04

(54) **Verfahren zur Herstellung von Phosphinat- oder Phosphonatgruppen enthaltenden tertiären Phosphanen und neue Phosphinatgruppen enthaltende tertiäre Phosphane**
Process for the preparation of tertiary phosphanes containing phosphinate or phosphonate groups and novel tertiary phosphanes containing phosphinate groups
Procédé de préparation de phosphanes tertiaires contenant des groupes phosphinates ou phosphonates et nouveaux phosphanes contenant des groupes phosphinates

(30) Priorität: 17.05.1996 DE 19620023
(43) Veröffentlichungstag der Anmeldung: 19.11.1997
(73) Patentinhaber: Celanese Chemicals Europe GmbH, 60439 Frankfurt am Main (DE)
(72) Erfinder: Seitz, Thomas, Dr., 68542 Heddesheim (DE); Haber, Steffen, Dr., 61462 Königstein (DE); Kleiner, Hans-Jerg, Dr., 61476 Kronberg (DE)

(56) Entgegenhaltungen:
- WO-A-97/05104
- J. ORG. CHEM. (JOCEAH);67; VOL.32 (7); PP.2176-80, AMERICAN POTASH AND CHEM. CORP.;WHITTIER; CALIF., XP002039488 BALDWIN R A ET AL: "Application of the Hammett equation to organophosphorus-substituted phosphinic and benzoic acids"
- J. CHEM. SOC., CHEM. COMMUN. (JCCCAT,00224936);95; (15); PP.1487-8, GEORG WASHINGTON UNIV.;DEP. CHEM.; WASHINGTON; 20052; DC; USA (US), XP002039489 SCHULL T L ET AL: "The first examples of an aryl ring substituted by both phosphine and phosphonate moieties: synthesis and characterization of the new highly water-soluble phosphine ligand Na2[Ph2P(C6H4-p-PO3)].1.5H2O and platinum(II) complexes"
- PHOSPHORUS, SULFUR SILICON RELAT. ELEM. (PSSLEC,10426507);96; VOL.117,; PP.287-292, INST. FUR ANGEWANDTE CHEMIE BERLIN-ADLERSHOF;BERLIN; 12489; GERMANY (DE), XP002039490 KOCKRITZ A ET AL: "Aromatic phosphonate-phosphines"

## Beschreibung

Die vorliegende Erfindung liegt auf dem Gebiet der organischen Phosphorchemie.
Die Erfindung betrifft die Herstellung von Phosphinat- oder Phosphonatgruppen tragenden tertiären Phosphanen durch nucleophile Substitution von Fluorarylphosphon- oder Fluorarylphosphinsäureestern mit sekundären Phosphiden. Die auf diesem Wege zugänglichen, neuen Phosphinate oder Phosphonate finden als Bestandteil von Katalysatorsystemen Verwendung.

Komplexverbindungen, die als Zentralatom ein Metall der 8. Nebengruppen des Periodensystems der Elemente und als Liganden P(III)-Verbindungen, nämlich Phosphane oder Phosphite und daneben gegebenenfalls noch weitere, zur Komplexbildung befähigte Gruppen enthalten, finden in den letzten Jahren zunehmend Anwendung als Katalysatoren für organisch-chemische Synthesen. Statt in homogener Phase kann man die Umsetzungen auch in heterogenen, mehrphasigen Reaktionssystemen durchführen. Ein Vorteil dieser Verfahrensvariante ist die einfache und schonende Trennung des in Wasser gelösten Katalysators von dem in Wasser nicht löslichen Reaktionsprodukt.

Zweiphasige Verfahren haben sich auch in technischem Maßstab gut bewährt, weshalb es eine lohnende Aufgabe darstellt, neue Verbindungen aus der Gruppe der wasserlöslichen Phosphane bereitzustellen, um Anwendungsmöglichkeiten zu ergänzen und zu erweitern.

In J. Chem. Soc., Chem. Commun. 1995, 1487-1488 werden Triphenylphosphan-monophosphonate durch Lithiierung von Diphenylphosphino-p-brombenzol hergestellt. Mit diesem und dem in J. Org. Chem. 32, 1967, 2176-2180 beschriebenen Verfahren, deren Schlüsselschritt jeweils die Lithiierung von para-Bromtriphenylphosphan ist, ist die Darstellung der entsprechenden ortho-lsomeren aufgrund der Unzugänglichkeit von ortho-Bromtriphenylphosphan nicht möglich.

Der vorliegenden Erfindung lag daher die Aufgabe zugrunde, ein Verfahren zur Herstellung von tertiären Phosphanen zu entwickeln, wodurch Phosphinat- und/oder Phosphonatgruppen in para-, meta- und ortho-Stellung zum dreiwertigen Phosphoratom einführbar sind.

Diese Aufgabe wird durch eine palladiumkatalysierte Kupplung von Bromfluorbenzolen mit Alkylphosphonigsäurealkylestern oder mit Alkylphosphorigsäurealkylestern und Umsetzung der entstandenen Fluorphenylphosphinsäurealkylestern oder Fluorphenylphosphonsäurealkylestern mit einem Metallphosphid gelöst.

Gegenstand der vorliegenden Erfindung ist ein Verfahren zur Herstellung eines tertiären Phosphans der Formel (I) 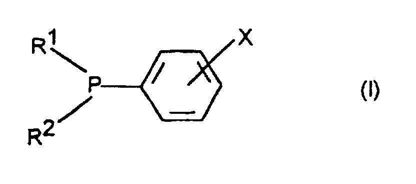 worin
- X: eine Gruppe der Formeln (Ia) oder (Ib) bedeutet, 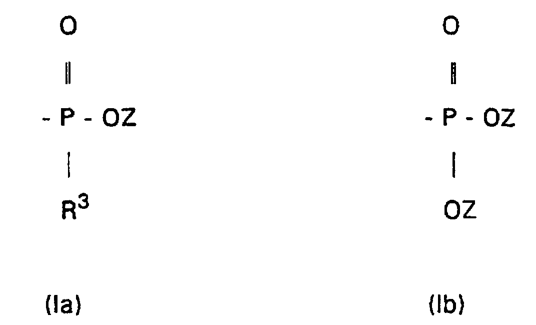
wobei
- Z: Wasserstoff, ein Alkalimetall, das stöchiometrische Äquivalent eines Erdalkalimetalls, ein Ammoniumion, ein Mono-, Di-, Tri- oder Tetraalkylammoniumion oder ein Rest R⁴ ist, wobei R⁴ ein C₁-C₃₀-Alkylrest ist; und
- R³: ein geradkettiger oder verzweigter C₁-C₄-Alkylrest ist;
- R¹ und R²: gleich oder verschieden sind und einen geradkettigen, verzweigten oder cyclischen C₁-C₃₀-Alkylrest oder C₆-C₁₀-Arylrest, der unsubstituiert oder durch ein bis fünf C₁-C₃-Alkylreste substituiert ist, bedeuten oder R¹ und R² zusammen mit dem dreiwertigen P-Atom ein Dibenzophospholyl der Formel 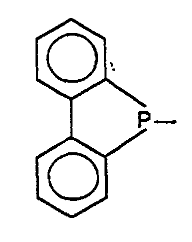 oder ein 3,4-Dimethylphospholyl der Formel 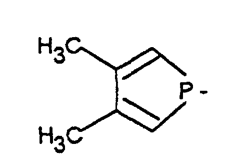 bilden,
dadurch gekennzeichnet, daß man ein Bromfluorbenzol der Formel (V) 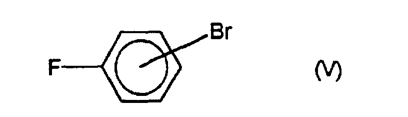 in Gegenwart eines phosphanhaltigen Palladiumkatalysators und einer Base
entweder mit einem (C₁-C₄)-Alkylphosphonigsäure-(C₁-C₄)-alkylester der Formel (IVa) zu einem Fluorphenylphosphinsäure-(C₁-C₄)-alkylester der Formel (IIIa) 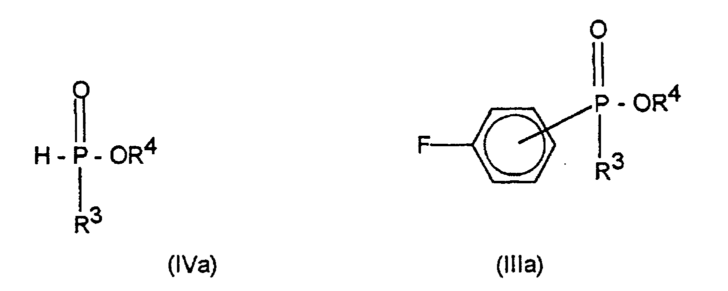 oder mit einem Phosphorigsäuredi-(C₁-C₄)-alkylester der Formel (IVb) zu einem Fluorphenylphosphonsäuredi-(C₁-C₄)-alkylester der Formel (IIIb) 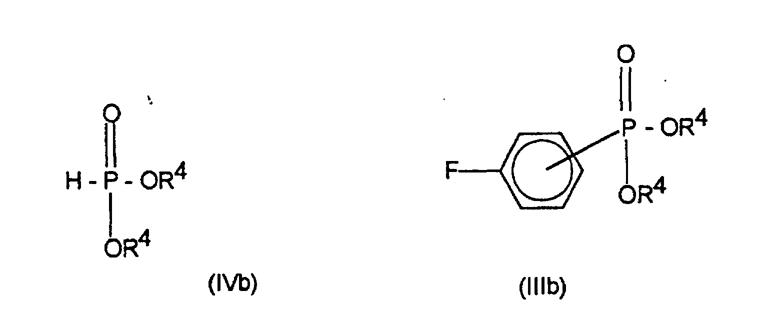 umsetzt;
die Verbindung der Formel (IIIa) oder der Formel (IIIb) in einem polar-aprotischen Lösungsmittel mit einem Alkali- oder Erdalkaliphosphid der Formel (II) 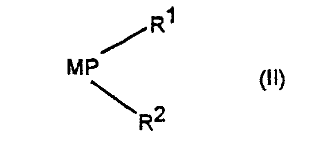 worin M ein Alkalimetall oder das stöchiometrische Äquivalent eines Erdalkalimetalls bedeutet, zu einem tertiären Phosphanylphosphinat der Formel (Ic) oder zu einem tertiären Phosphanylphosphonat der Formel (Id) 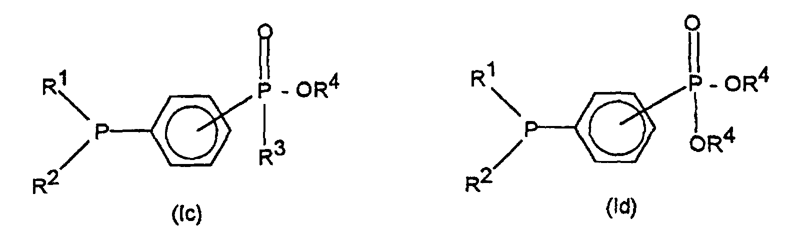 umsetzt;
gegebenenfalls das tertiäre Phosphanyl-phosphinat oder das tertiäre Phosphanyl-phosphonat verseift, wobei die salzartigen Verbindungen der Formeln (Ia) oder (Ib) mit Z gleich Alkalimetall, dem stöchiometrischen Äquivalent eines Erdalkalimetalls, Ammoniumions oder Mono-, Di-, Tri- oder Tetraalkylammoniumion entstehen; und
gegebenenfalls die salzartigen Verbindungen der Formel (la) oder (Ib) mit einer Mineralsäure versetzt, so daß die freien Säuren der Verbindungen der Formeln (la) oder (Ib) mit Z gleich Wasserstoff entstehen.

In den Verbindungen der vorstehenden Formeln haben die Variablen folgende bevorzugten Bedeutungen:
- Z: ist Wasserstoff, Na⁺, K⁺, 1/2Mg²⁺, 1/2Ca²⁺, NH₄⁺, ein Mono-, Di-, Tri- oder Tetra-(C₁-C₄)-alkylammonium oder ein Rest R⁴, der bevorzugt C₁-C₆-Alkyl, insbesondere ein C₄-Alkyl, bedeutet;
- R³: ist Methyl oder Ethyl;
- R¹ und R²: sind gleich und bedeuten jeweils einen geradkettigen oder verzweigten C₁-C₆-Alkylrest, einen Cyclohexylrest oder einen Phenylrest; und
- M: ist Na⁺, K⁺, 1/2Ca²⁺ oder 1/2Mg²⁺.

Die Gruppe X in den Verbindungen der Formel (I) sowie die Phosphinat- oder Phosphonatgruppen in den Verbindungen der Formeln (Ia) bis (Id) können in ortho-, meta- oder para-Position zum dreiwertigen Phosphoratom stehen. Entsprechend kann in dem Bromfluorbenzol der Formel (V) das Bromatom in ortho-, meta- oder para-Position zum Fluoratom stehen.

Bei dem erfindungsgemäßen Verfahren wird das Bromfluorbenzol mit dem Alkylphosphonigsäurealkylester oder Phosphorigsäuredialkylester zweckmäßigerweise im molaren Verhältnis von 1:1 bis 1:1,5 in einem organischen Lösungsmittel umgesetzt. Die Temperatur beträgt 80 bis 150°C, vorzugsweise 95 bis 120°C.

Der phosphanhaltige Palladiumkatalysator kann in situ durch Zugabe mehrerer Äquivalente eines Phosphans und einer Palladiumverbindung dargestellt werden, wobei Mono- oder Bis-, Alkyl- oder Arylphosphane verwendet werden können; bevorzugt ist Triphenylphosphan. Bei der eingesetzten Palladiumverbindung handelt es sich bevorzugt um Palladium(II)-Salze, z.B. Pd(II)-chlorid oder Pd(II)-Acetat, oder um Palladium(O)-verbindungen, z.B. Palladium- bis(dibenzylidenaceton), welches besonders bevorzugt ist. 0,1 bis 4,5 Mol-%, vorzugsweise 0,5 bis 2 Mol-%, des Palladiumkatalysators sind für die erfindungsgemäße Umsetzung ausreichend. Ein Einsatz von 5 Mol-% oder gar 10 Mol-% des teuren Tetrakis-(triphenylphosphan)-palladium, wie in J. Chem. Soc. Perkin Trans. 1 (1995) 1145 oder in Synthesis 9, (1984) 778 beschrieben, ist nicht notwendig. Als organisches Lösungsmittel eignen sich Dimethylformamid, Dimethylsulfoxid, Xylole oder Toluol. Geeignete Basen sind z.B. Natriumacetat oder Kaliumacetat, Alkali- oder Erdalkalicarbonate sowie Trialkylamine. Ganz besonders bevorzugt ist Triethylamin, das gleichzeitig als Lösungsmittel dient. Die Reaktionszeiten liegen, je nach Substrat und Reagens, zwischen 2 und 50 Stunden.

Die nucleophile Substitution des Fluorids in den Verbindungen der Formeln (IIIa) und (IIIb) wird mit 1 bis 1,5 Mol-Äquivalenten des Alkali- oder Erdalkalimetallphosphids in einem polar-aprotischen Lösungsmittel bei -5°C bis +100°C durchgeführt. Bevorzugt findet die Reaktion in Ethern bei -5°C bis +50°C statt, insbesondere bevorzugt ist Tetrahydrofuran als Lösungsmittel und eine Temperatur von -5°C bis +23°C. Je nach Substrat und Reagens liegen die Reaktionszeiten zwischen 2 und 72 Stunden.

Eine Reinigung der Verbindungen der Formeln (Ic) und (Id) kann durch Kristallisation oder Säulenchromatographie erfolgen, ist für weitere Umsetzungen jedoch nicht unbedingt erforderlich.

Die Esterverseifung zu den tertiären Phosphanyl-phosphinat-Salzen oder -phosphonat-Salzen der Formeln (la) und (Ib) erfolgt vorzugsweise in einer Mischung aus Tetrahydrofuran und 1 bis 3 Mol-Äquivalenten wäßriger Base, insbesondere Alkalihydroxidlösung, unter Rückflußbedingungen für 3 bis 12 Stunden. Durch Neutralisation mit wäßriger Mineralsäure, Einengen, Aufnehmen des Rückstands in organischen Lösungsmitteln und Abtrennen der anorganischen Salze durch Filtration erhält man nach Entfernung des Lösungsmittels die freien Phosphinsäuren oder Phosphonsäuren.

Aus den nicht wasserlöslichen Säuren lassen sich durch Behandeln mit äquimolaren Mengen Alkalihydroxid, Alkalihydrogencarbonat oder Alkalicarbonat in Wasser die wäßrigen Phosphinat- oder Phosphonatlösungen in gewünschter Molarität erhalten.

Alternativ dazu können die entsprechenden Salze der Phosphinsäuren oder Phosphonsäuren auch direkt nach erfolgter alkalischer Verseifung durch Umkristallisieren des Eindampfrückstands gewonnen werden.

Das erfindungsgemäße Verfahren hat gegenüber dem in der US-PS 3,992,273 beschriebenen Verfahren, in welchem Fluoriodbenzole mit Trialkylphosphoniten unter UV-Bestrahlung zu Fluorphenylphosphonigsäureestern umgesetzt werden, den Vorteil, daß die kostengünstigeren Brom-fluorbenzole eingesetzt werden können.

Gegenstand der vorliegenden Erfindung sind weiterhin Verbindungen der Formel (I) 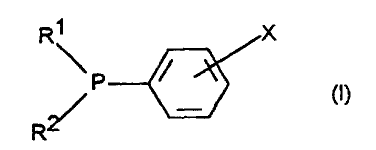 worin
- X: eine Gruppe der Formel (Ia) ist 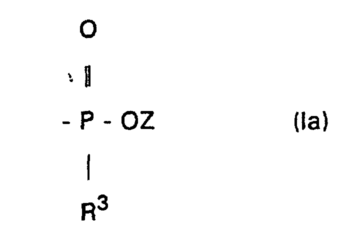 worin
Z Wasserstoff, ein Alkalimetall, das stöchiometrische Äquivalent eines Erdalkalimetalls, ein Ammoniumion, ein Mono-, Di-, Tri- oder Tetraalkylammonium oder ein Rest R⁴ ist, wobei R⁴ ein C₁-C₃₀-Alkylrest ist; und
R³ ein geradkettiger oder verzweigter C₁-C₄-Alkylrest ist;
R¹ und R² gleich oder verschieden sind und einen geradkettigen, verzweigten oder cyclischen C₁-C₃₀-Alkylrest oder C₆-C₁₀-Arylrest, der unsubstituiert oder durch ein bis fünf C₁-C₃-Alkylreste substituiert ist, bedeuten oder R¹ und R² zusammen mit dem dreiwertigen P-Atom ein Dibenzophospholyl der Formel 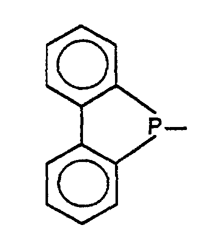 oder ein 3,4-Dimethylphospholyl der Formel 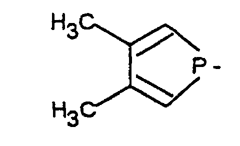 bilden.

Bevorzugt sind Verbindungen der Formel (I), worin
- Z: H⁺, Na⁺, K⁺, Mg²⁺/2, Ca²⁺/2, NH₄⁺, Mono-, Di-, Tri- oder Tetra-(C₁-C₄)-alkylammonium, Methyl, Ethyl, n-Propyl, iso-Propyl, n-Butyl, iso-Butyl oder tert.-Butyl;
- R³: Methyl oder Ethyl; und
- R¹ und R²: jeweils Methyl, Cyclohexyl oder Phenyl bedeuten.

Besonders bevorzugt bedeutet R⁴ einen Butylrest, insbesondere iso-Butyl.

Die Phosphinatgruppe kann sich in ortho-, meta- oder para-Position zum dreiwertigen Phosphoratom befinden.
Ganz besonders bevorzugt sind die Verbindungen (4-Diphenylphosphinophenyl)-methyl-phosphinsäureisobutylester, (3-Diphenylphosphino-phenyl)methylphosphinsäureisobutylester und (2-Diphenylphosphino-phenyl)-methylphosphinsäureisobutylester; (4-Diphenylphosphino-phenyl)-methylphosphinsäure, (3-Diphenylphosphino-phenyl)-methyl-phosphinsäure und (2-Diphenylphosphino-phenyl)-methyl-phosphinsäure, sowie die Natriumsalze der genannten Säuren.

Insbesondere das Natriumsalz der (4-Diphenylphosphino-phenyl)-methylphosphinsäure zeichnet sich - trotz der hydrophoben Methylgruppe und der einfach negativen Ladung des Anions - überraschenderweise durch eine höhere Wasserlöslichkeit (590 g/l) sowohl im Vergleich zum Dinatriumsalz des Triphenylphosphanmonophosphonats ("Na₂TPPMP", 380 g/l bei 20°C [Chemtech, 1995, 33-38]) als auch zum Natriumsalz des Triphenylphosphanmonosulfonats ("Na[TPPMS]", 80 g/l bei 20°C [J. Chem. Soc. Commun. 1995, 1487-1488]) aus.

Die Verbindungen der Formel (I) eignen sich als Liganden in Metallkomplexkatalysierten organischen Reaktionen.
Besonders geeignet sind sie als Katalysatorbestandteile in Übergangsmetallkomplex-katalysierten C-C-Verknüpfungsreaktionen. Insbesondere eignen sie sich als Liganden in der Palladium-katalysierten Kreuzkupplung von Arylboronsäuren mit Arylhalogeniden (Suzuki-Kupplung). So erhält man bei der Umsetzung von 2-Chlorbenzonitril mit para-Toluolboronsäure 2-Cyano-4'-methylbiphenyl in guten Ausbeuten, während in der EP-A-0 470 795 hierfür das wesentlich teurere 2-Brom-benzonitril eingesetzt werden muß.

### Beispiel 1 (4-Diphenylphosphino-phenyl)-methyl-phosphinsäure

### 1.1 4-Fluorphenyl-methyl-phosphinsäureisobutylester

Eine Mischung aus 50,0 g (289 mmol) 4-Bromfluorbenzol, 43,3 g (318 mmol) Methanphosphonigsäureisobutylester, 43,8 ml (318 mmol) Triethylamin, 1,64 g (0,29 mmol, 1 mol-%) Palladium-bis-(dibenzylidenaceton) und 1,50 g (0,58 mmol, 2 mol-%) Triphenylphosphan werden unter Inertgasatmosphäre 20 Stunden bei 100°C erhitzt. Bei 23°C filtriert man vom entstandenen Ammoniumsalz ab und engt das Filtrat im Vakuum ein. Nach fraktionierter Destillation im Vakuum erhält man 54,60 g (83 % d.Th.) 4-Fluorphenyl-methylphosphinsäureisobutylester mit einem Siedepunkt von 83°C/0,08 mbar.
¹H-NMR-Spektrum (CDCl₃):
   0,91 (s, 3H, CH₃); 0,93 (s, 3H, CH₃); 1,68 (d, J_{PH} = 14,7 Hz, 3H, P-CH₃); 1,92 (septett, ³J_{HH} = 6,7 Hz, CH-isobutyl); 3,50 (m, 1H, Hₐ-OCH₂); 3,81 (m, 1H, H_{b}-OCH₂); 7,18 (mc, 2H, Aromaten-H); 7,81 (mc, 2H, Aromaten-H) ppm.
¹³C-NMR-Spektrum (CDCl₃):
   15,88 (d, ¹J_{PC} = 105,0 Hz, P-CH₃), 18,77 (d, ⁴J_{PC} = 3,8 Hz, 2CH₃); 29,16 (d, ³J_{PC} = 7,8 Hz, d, CH-isobutyl); 70,41 (d, ²J_{PC} = 6,0 Hz, O-CH₂); 115,7-167,6 (Aromaten-C) ppm.
³¹P-NMR-Spektrum (CDCl₃): 41,2 ppm.
¹⁹F-NMR-Spektrum (CDCl₃): -106,9 (m) ppm.

### 1.2 (4-Diphenylphosphino-phenyl)-methyl-phosphinsäureisobutylester

Zu einer Lösung von 21,90 g (95 mmol) 4-Fluorphenyl-methylphosphinsäureisobutylester in 150 ml THF werden bei -5°C 200 ml (100 mmol) Kaliumdiphenylphosphid-Lösung in THF (Hersteller: Aldrich) getropft. Nach 20 Stunden Rühren bei 23°C wird die Mischung durch Zugabe von 250 ml entgastem Wasser und 15 min Rühren hydrolysiert. Nach Extraktion mit Ethylacetat, Trocknen der organischen Phase über Na₂SO₄, Einengen am Rotationsverdampfer und Trocknen im Vakuum erhält man 37,0 g (4-Diphenylphosphino-phenyl)-methyl-phosphinsäureisobutylester in Form eines gelben Öls.
¹H-NMR-Spektrum (CD₂Cl₂):
   0,89 (d, J_{HH} = 6,7 Hz, 3H, CH₃); 0,90 (d, J_{HH} = 6,7 Hz, 3H, CH₃); 1,65 (d, J_{PH} = 14,6 Hz, 3H, P-CH₃); 1,90 (septett, J_{HH} = 6,7 Hz, CH-isobutyl); 3,51 (m, 1H, Hₐ-OCH₂); 3,78 (m, 1H, H_{b}-OCH₂); 7,13-7,88 (14H, Aromaten-H) ppm.
¹³C-NMR-Spektrum (CD₂Cl₂):
   16,87 (d, ¹J_{PC} = 102,7 Hz, P-CH₃), 18,69 (d, ⁴J_{PC} = 3,0 Hz, 2 CH₃); 29,11 (d, ³J_{PC} = 6,8 Hz, d, CH-isobutyl); 70,39 (d, ²J_{PC} = 6,6 Hz, O-CH₂); 128,60-136,1 (Aromaten-C) ppm.
³¹P-NMR-Spektrum (CD₂Cl₂): 42,5 (Phosphinat-P); -4,1 (-Phosphan-P) ppm.

### 1.3 (4-Diphenylphosphino-phenyl)-methyl-phosphinsäure

Zu einer Lösung von 34,52 g (87 mmol) (4-Diphenylphosphino-phenyl)-methylphosphinsäureisobutylester in 50 ml THF werden bei 23°C 8,70 g (217,5 mmol) NaOH in 40 ml Wasser getropft. Nach 6 Stunden Erhitzen unter Rückfluß tropft man bei 23°C 18,1 ml (218 mmol) konzentrierte Salzsäure zu, rührt 10 min bei 23°C und engt am Rotationsverdampfer vollständig ein. Der Rückstand wird in Methylenchlorid aufgenommen, die Lösung wird über Na₂SO₄ getrocknet und vollständig eingeengt. Nach Trocknen im Vakuum erhält man 28,3 g (4-Diphenylphosphino-phenyl)-methyl-phosphinsäure (90 % der Theorie) in Form eines blaßgelben Feststoffes mit Fp. 40°C.
¹H-NMR-Spektrum (CDCl₃):
   1,07 (d, J_{PH} = 14,2 Hz, 3 H, P-CH₃); 7,03 - 7,22 (14 H, Aromaten-H) ppm.
¹³C-NMR-Spektrum (CDCl₃):
   18,04 (d, ¹J_{PC} = 99,2 Hz, P-CH₃); 128,48 - 140,45 (Aromaten-C)
³¹P-NMR-Spektrum (CDCl₃):
   26,7 (Phosphinsäure-P); -11,5 (Phosphan-P) ppm.
EI-Massenspektrum:
   [M⁺] = 340

### 1.4 Na-(4-Diphenylphosphino-phenyl)-methyl-phosphinat

15,0 g (44,1 mmol) (4-Diphenylphosphino-phenyl)-methyl-phosphinsäure werden mit 100 ml einer 3,7 gew.-%igen Natriumhydrogencarbonat-Lösung (44,1 mmol NaHCO₃) versetzt und bei Raumtemperatur solange gerührt, bis die CO₂-Entwicklung beendet ist. Die wäßrige Lösung wird im Vakuum vollständig eingeengt und getrocknet. Man erhält 15,6 g (97 % d.Th.)
Na-(4-Diphenylphosphino-phenyl)-methyl-phosphinat.
Löslichkeit in Wasser: 590 g/l

### Beispiel 2 (3-Diphenylphosphino-phenyl)-methyl-phosphinsäure

### 2.1 3-Fluorphenyl-methyl-phosphinsäureisobutylester

Analog zu Beispiel 1.1 liefert der Ansatz 76,30 g (436 mmol)
3-Bromfluorbenzol, 65,29 g (480 mmol) Methanphosphonigsäureisobutylester, 66,4 ml (480 mmol) Triethylamin, 2,50 g (1 mol%) Palladium-bis-(dibenzylidenaceton) und 2,28 g (2 mol%) Triphenylphosphan nach 17 Stunden bei 100°C 89,30 g (89 % d.Th.) 3-Fluorphenyl-methylphosphinsäureisobutylester mit einem Siedepunkt von 96°C/1,30 mbar.
¹H-NMR-Spektrum (CDCl₃):
   0.91 (s, 3H, CH₃); 0,94 (s, 3H,CH₃); 1,69 (d, ²J_{PH} = 15,0 Hz, 3H, P-CH₃); 1,94 (septett, J = 6,6 Hz, CH-isobutyl); 3,51 (m, 1H, Hₐ-OCH₂); 3,82 (m, 1H, H_{b}-OCH₂); 7,19-7,61 (4H, Aromaten-H) ppm.
¹³C-NMR-Spektrum (CDCl₃):
   16,70 (d, ¹J_{PC} = 103,5 Hz, P-CH₃), 18,73 (s, CH₃); 18,77 (s, CH₃); 29,16 (d, ³J_{PC} = 7,5 Hz, CH-isobutyl); 70,58 (d, ²J_{PC} = 5,5 Hz, O-CH₂); 117,89-164,30 (Aromaten-C) ppm.
³¹P-NMR-Spektrum (CDCl₃): 40,9 (d, J_{FP} = 6,0 Hz) ppm.
¹⁹F-NMR-Spektrum (CDCl₃): -111,7 (m) ppm.

### 2.2 (3-Diphenylphosphino-phenyl)-methyl-phosphinsäureisobutylester

Zu einer Lösung von 4,00 g (17,4 mmol) 3-Fluorphenyl-methylphosphinsäureisobutylester in 20,0 ml THF werden bei -5°C 36,5 ml (18,3 mmol) Kaliumdiphenylphosphid-Lösung in THF (Hersteller: Aldrich) getropft. Nach 48 Stunden Rühren bei 23°C wird die Mischung durch Zugabe von 20 ml entgastem Wasser und 15 min Rühren hydrolysiert. Nach Extraktion mit Ethylacetat, Trocknen der organischen Phase über Na₂SO₄, Einengen und Trocknen im Vakuum erhält man 5,60 g (3-Diphenylphosphino-phenyl)-methylphosphinsäureisobutylester in Form eines gelben Öls.
¹H-NMR-Spektrum (CDCl₃):
   0,83 (d, J_{HH} = 6,5 Hz, 3H, CH₃); 0,85 (d, J_{HH} = 6,5 Hz, 3H, CH₃); 1,61 (d, J_{PH} = 14,3 Hz, 3H, P-CH₃); 1,81 (septett, J_{HH} = 6,6 Hz, CH-isobutyl); 3,41 (m, 1H, Hₐ-OCH₂); 3,74 (m, 1H, H_{b}-OCH₂); 7,26-7,84 (4H, Aromaten-H) ppm.
¹³C-NMR-Spektrum (CDCl₃):
   15,67 (d, ¹J_{PC} = 102,6 Hz, P-CH₃), 18,69 (d, ⁴J_{PC} = 4,6 Hz, 2 CH₃); 29,01 (d, ³J_{PC} = 6,8 Hz, CH-isobutyl); 70,32 (d, ²J_{PC} = 6,5 Hz, O-CH₂); 128,58-138,83 (Aromaten-C) ppm.
³¹P-NMR-Spektrum (CDCl₃): 42,5 (Phosphinat-P); -4,5 (Phosphan-P) ppm.

### 2.3 (3-Diphenylphosphino-phenyl)-methyl-phosphinsäure

Zu einer Lösung von 2,50 g (6,3 mmol) (3-Diphenylphosphino-phenyl)-methylphosphinsäureisobutylester in 7 ml THF werden bei 23°C 0,50 g (12,6 mmol) NaOH in 7 ml Wasser getropft. Nach 6 Stunden Erhitzen unter Rückfluß tropft man bei 23°C 1,04 ml (12,6 mmol) konzentrierte Salzsäure zu, rührt 10 min bei 23°C und engt im Vakuum zur Trockene ein. Der Rückstand wird in siedendem Methanol weitgehend gelöst, heiß filtriert und 22 h bei -20°C kristallisiert. Man erhält 1,02 g (3-Diphenylphosphino-phenyl)-methyl-phosphinsäure (60 % d.Th.) in Form eines farblosen Feststoffes mit Fp. 173°C.
¹H-NMR-Spektrum (D₆-DMSO):
   1,45 (d, ²J_{PH} = 14,5 Hz, 3H, P-CH₃); 7,23-8,08 (14H, Aromaten-H) ppm.
¹³C-NMR-Spektrum (D₆-DMSO): 16,63 (d, ¹J_{PC} = 99,0 Hz, P-CH₃), 128,59-137,29 (Aromaten-C).
³¹P-NMR-Spektrum (D₆-DMSO): 34,1 (Phosphinsäure-P); -5,7 (Phosphan-P) ppm.

### Beispiel 3 (2-Diphenylphosphino-phenyl)-methyl-phosphinsäure

### 3.1 2-Fluorphenyl-methyl-phosphinsäureisobutylester

Analog zu Beispiel 1.1 liefert der Ansatz 100,00 g (578 mmol) 2-Bromfluorbenzol, 86,60 g (636 mmol) Methanphosphonigsäureisobutylester, 88,1 ml (636 mmol) Triethylamin, 3,28 g (1 mol%) Palladium-bis-(dibenzylidenaceton) und 3,00 g (2 mol%) Triphenylphosphan nach 48 Stunden bei 100°C 96,30 g (73 % d.Th.) 2-Fluorphenyl-methyl-phosphinsäureisobutylester mit einem Siedepunkt von 93°C/1,40 mbar.
¹H-NMR-Spektrum (CDCl₃):
   0,89 (s, 3H, CH₃); 0,91 (s, 3H, CH₃); 1,79 (d, ²J_{PH} = 15,6 Hz, 3H, P-CH₃); 1,90 (septett, J = 6,7 Hz, CH-isobutyl); 3,48 (m, 1H, Hₐ-OCH₂); 3,78 (m, 1H, H_{b}-OCH₂); 7,13 (mc, 1H, Aromaten-H); 7,29 (mc, 1H, Aromaten-H); 7,56 (mc, 1H, Aromaten-H); 7,96 (mc, 1H, Aromaten-H) ppm.
¹³C-NMR-Spektrum (CDCl₃):
   16,00 (dd, ¹J_{PC} = 105,0 Hz, ⁴J_{FC} = 3,0 Hz, P-CH₃), 18,67 (s, 2 CH₃); 29,07 (d, ³J_{PC} = 6,5 Hz, d, CH-isobutyl); 70,73 (d, ²J_{PC} = 7,5 Hz, O-CH₂); 115,67-164,75 (Aromaten-C) ppm.
³¹P-NMR-Spektrum (CDCl₃): 37,4 ppm.
¹⁹F-NMR-Spektrum (CDCl₃): -105,7 (m) ppm.

### 3.2 (2-Diphenylphosphino-phenyl)-methyl-phosphinsäureisobutylester

Zu einer Lösung von 4,00 g (17,4 mmol) 2-Fluorphenyl-methylphosphinsäureisobutylester in 20,0 ml THF werden bei -5°C 36,5 ml (18,3 mmol) Kaliumdiphenylphosphid-Lösung in THF (Hersteller: Aldrich) getropft. Nach 72 Stunden Rühren bei 23°C wird die Mischung durch Zugabe von 20 ml entgastem Wasser und 15 min Rühren hydrolysiert. Nach Extraktion mit Ethylacetat und Trocknen der organischen Phase über Na₂SO₄ wird im Vakuum eingeengt. Nach Umkristallisieren aus siedendem Heptan/THF-Gemisch (9:1) erhält man 3,87 g (2-Diphenylphosphino-phenyl)-methyl-phosphinsäureisobutylester in Form eines farblosen Feststoffs mit Fp. 124°C.
¹H-NMR-Spektrum (CDCl₃):
   0,66 (d, J_{HH} = 7,2 Hz, 3H, CH₃); 0,75 (d, J_{HH} = 7,2 Hz, 3H, CH₃); 1,95 (d, J_{PH}= 14,8 Hz, 3H, P-CH₃); 1,49 (septett, J_{HH} = 7,2 Hz, CH-isobutyl); 3,04 (m, 1H, Hₐ-OCH₂); 3,62 (m, 1H, H_{b}-OCH₂); 7,15-8,25 (14H, Aromaten-H) ppm.
¹³C-NMR-Spektrum (CDCl₃):
   17,63 (dd, ¹J_{PC} = 100,3 Hz, ⁴J_{PC} = 14,9 Hz, P-CH₃), 18,72 (d, ⁴J_{PC} = 16,0 Hz, 2 CH₃); 28,91 (d, ³J_{PC} = 6,5 Hz, CH-isobutyl); 70,48 (d, ²J_{PC} = 6,5 Hz, O-CH₂); 128,31-140,46 (Aromaten-C) ppm.
³¹P-NMR-Spektrum (CDCl₃):
   42,5 (Phosphinat-P); -4,1 (Phosphan-P) ppm.

### 3.3 (2-Diphenylphosphino-phenyl)-methyl-phosphinsäure

Zu einer Lösung von 1,50 g (3,8 mmol) (2-Diphenylphosphino-phenyl)-methylphosphinsäureisobutylester in 5 ml THF werden bei 23°C 0,30 g (7,6 mmol) NaOH in 5 ml Wasser getropft. Nach 6 Stunden Erhitzen unter Rückfluß verdünnt man mit weiteren 5 ml THF, tropft bei 23°C 3,0 ml 2-normale Salzsäure zu und rührt 20 min bei 23°C. Nach Phasentrennung wird die wäßrige Phase zweimal mit je 20 ml Dichlormethan extrahiert, und die vereinigten organischen Phasen wäscht man mit 20 ml Wasser. Nach Trocknen über Na₂SO₄, vollständigem Einengen im Vakuum und Trocknen im Hochvakuum erhält man 1,17 g (2-Diphenylphosphino-phenyl)-methylphosphinsäure (92 % d.Th.) in Form eines blaßgelben Feststoffes mit Fp. 167°C.
¹H-NMR-Spektrum (CDCl₃): 1,79 (d, ²J_{PH} = 15,02 Hz, 3H, P-CH₃); 7,18-8,44 (14 H, Aromaten-H) ppm.
¹³C-NMR-Spektrum (CDCl₃): 18,77 (dd, ¹J_{PC} = 100,0 Hz, ⁴J_{PC} = 13,1 Hz, P-CH₃); 128,59 - 137,29 (Aromaten-C) ppm.
³¹P-NMR-Spektrum (CDCl₃): 45,3 (d, ³J_{PP} = 4,8 Hz, Phosphinsäure-P); -10,9 (d, ³J_{PP} = 4,8 Hz, Phosphan-P) ppm.

### Beispiel 4 4-Diphenylphosphino-phenyl-phosphonsäure

### 4.1 4-Diphenylphosphino-phenyl-phosphonsäurediethylester

Zu einer Lösung von 3,09 g (13,2 mmol) 4-Fluorphenyl-phosphonsäurediethylester, hergestellt gemäß Phosphorus Sulfur 1980, 9(2), 197.202, in 20,0 ml THF werden bei -5°C 25,8 ml (12,9 mmol) Kaliumdiphenylphosphid-Lösung in THF (Hersteller: Aldrich) getropft. Nach 19 Stunden Rühren bei 23°C wird die Mischung durch Zugabe von 20 ml entgastem Wasser und 15 min Rühren hydrolysiert. Nach Extraktion mit Ethylacetat, Trocknen der organischen Phase über Na₂SO₄ wird am Rotationsverdampfer eingeengt. Man erhält 4,20 g 4-Diphenylphosphino-phenyl-phosphonsäurediethylester (82 % d.Th.) in Form eines blaßgelben Öls.
¹H-NMR-Spektrum (CDCl₃): 1,30 (m, 6H, 2CH₃); 4,09 (m, 4H, 2 OCH₂); 7,06-7,80 (14H, Aromaten-H) ppm.
³¹P-NMR-Spektrum (CDCl₃): 19,1 (Phosphonat-P); -4,0 (Phosphan-P) ppm.

### 4.2 4-Diphenylphosphino-phenyl-phosphonsäure

Zu einer Lösung von 2,00 g (5,0 mmol) 4-Diphenylphosphino-phenylphosphonsäurediethylester in 7 ml THF werden bei 23°C 0,40 g (10,0 mmol) NaOH in 7 ml Wasser getropft. Nach 6 Stunden Erhitzen unter Rückfluß verdünnt man mit weiteren 7 ml THF, tropft bei 23°C 4,0 ml 2-normale Salzsäure zu und rührt 20 min bei 23°C. Nach Phasentrennung wird die wäßrige Phase zweimal mit je 25 ml Dichlormethan extrahiert, und die vereinigten organischen Phasen wäscht man mit 25 ml Wasser. Nach Trocknen über Na₂SO₄, vollständigem Einengen am Rotationsverdampfer und Trocknen im Vakuum erhält man 1,54 g 4-Diphenylphosphino-phenyl-phosphonsäure (90 % d.Th.) in Form eines blaßgelben Feststoffes mit Fp. 87°C.
³¹P-NMR-Spektrum (CDCl₃): 16,9 (s, Phosphonsäure-P); -11,1 (s, Phosphan-P) ppm.

### Beispiel 5 Kreuzkupplung von 2-Chlorbenzonitril mit 4-Toluolboronsäure

Zur Herstellung des Katalysators werden 38,8 mg (0,219 mmol) Palladium-(II)-chlorid und 54,0 mg (0,657 mmol) Natriumacetat in 2,4 ml DMSO unter Argonatmosphäre 30 min bei 23°C gerührt. Anschließend werden 1,99 ml (0,875 mmol) einer 0,44 molaren wäßrigen Lösung von Natrium-4-diphenylphosphino-phenyl-phosphinat, hergestellt gemäß Beispiel 1.4, zugegeben und die Suspension wird weitere 30 min bei 23°C gerührt.
Unter Argonatmosphäre werden 30,0 g (0,2181 mol) 2-Chlorbenzonitril, 32,6 g (0,240 mol) 4-Toluolboronsäure und 16,2 g (70 mol%) Natriumcarbonat in 120 ml Ethylenglycol verrührt. Man gibt 20 ml Wasser zu und erwärmt auf 80°C. Nun wird die oben beschriebene Katalysator-Suspension zugegeben und man erhitzt 5 Stunden unter Rückfluß.
Bei 23°C wird die Mischung mit 100 ml Essigester versetzt. Die organische Phase wird abgetrennt, am Rotationsverdampfer eingeengt und im Vakuum fraktioniert destilliert. Man erhält 31,6 g (75 % d. Th.) 2-Cyano-4'-methylbiphenyl (Kp. 140°C/1,0 mbar; Fp. 50°C).

## Patentansprüche

1. Verfahren zur Herstellung eines tertiären Phosphans der Formel (I) 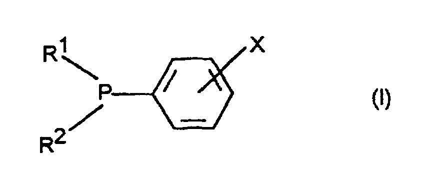 worin
X eine Gruppe der Formeln (Ia) oder (Ib) bedeutet, 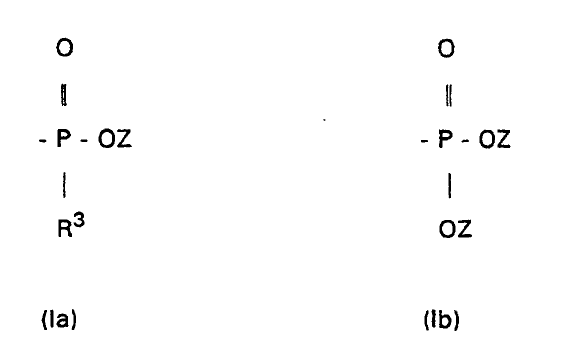
wobei
Z Wasserstoff, ein Alkalimetall, das stöchiometrische Äquivalent eines Erdalkalimetalls, ein Ammoniumion, ein Mono-, Di-, Tri- oder Tetraalkylammoniumion oder ein Rest R⁴ ist, wobei R⁴ ein C₁-C₃₀-Alkylrest ist; und
R³ ein geradkettiger oder verzweigter C₁-C₄-Alkylrest ist;
R¹ und R² gleich oder verschieden sind und einen geradkettigen, verzweigten oder cyclischen C₁-C₃₀-Alkylrest oder C₆-C₁₀-Arylrest, der unsubstituiert oder durch ein bis fünf C₁-C₃-Alkylreste substituiert ist, bedeuten oder R¹ und R² zusammen mit dem dreiwertigen P-Atom ein Dibenzophospholyl der Formel 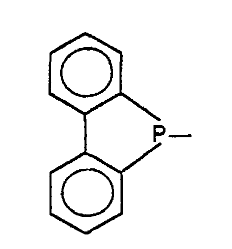 oder ein 3,4-Dimethylphospholyl der Formel 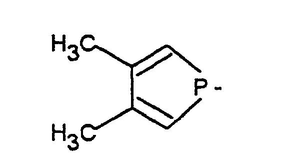 bilden,
**dadurch gekennzeichnet, daß** man ein Bromfluorbenzol der Formel (V) 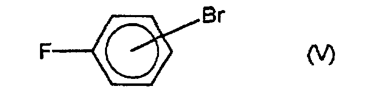 in Gegenwart eines phosphanhaltigen Palladiumkatalysators und einer Base
entweder mit einem (C₁-C₄)-Alkylphosphonigsäure-(C₁-C₄)-alkylester der Formel (IVa) zu einem Fluorphenylphosphinsäure-(C₁-C₄)-alkylester der Formel (IIIa) 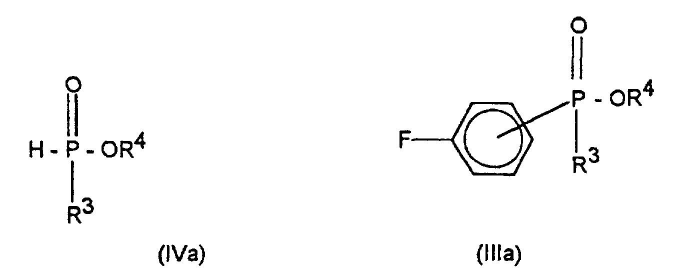 oder mit einem Phosphorigsäuredi-(C₁-C₄)-alkylester der Formel (IVb) zu einem Fluorphenylphosphonsäuredi-(C₁-C₄)-alkylester der Formel (IIIb) 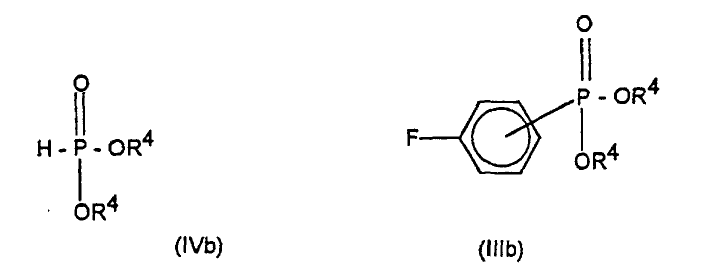 umsetzt;
die Verbindung der Formel (IIIa) oder der Formel (IIIb) in einem polar-aprotischen Lösungsmittel mit einem Alkali- oder Erdalkaliphosphid der Formel (II) 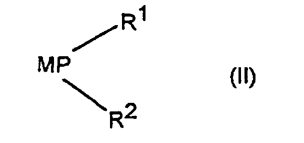 worin M ein Alkalimetall oder das stöchiometrische Äquivalent eines Erdalkalimetalls bedeutet, zu einem tertiären Phosphanylphosphinat der Formel (Ic) oder zu einem tertiären Phosphanylphosphonat der Formel (Id) 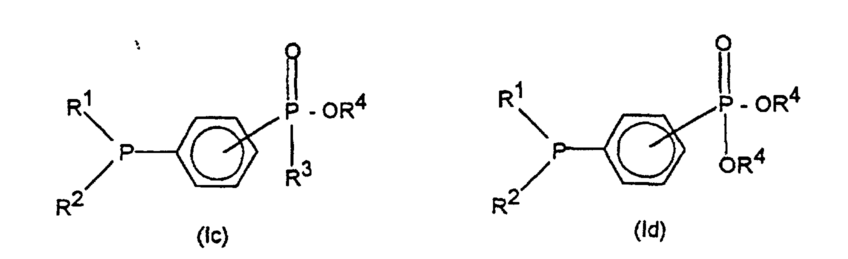 umsetzt;
gegebenenfalls das tertiäre Phosphanyl-phosphinat oder das tertiäre Phosphanyl-phosphonat verseift, wobei die salzartigen Verbindungen der Formeln (Ia) oder (Ib) mit Z gleich Alkalimetall, dem stöchiometrischen Äquivalent eines Erdalkalimetalls, Ammoniumion oder Mono-, Di-, Tri- oder Tetraalkylammoniumion entstehen; und
gegebenenfalls die salzartigen Verbindungen der Formel (Ia) oder (Ib) mit einer Mineralsäure versetzt, so daß die freien Säuren der Verbindungen der Formeln (Ia) oder (Ib) mit Z gleich Wasserstoff entstehen.

2. Verfahren nach Anspruch 1, **dadurch gekennzeichnet, daß** der phosphanhaltige Palladiumkatalysator aus Triphenylphosphan und Pd(II)-chlorid, Pd(II)-Acetat oder Pd(O)-bis(dibenzylidenaceton) besteht.

3. Verfahren nach Anspruch 1 oder 2, **dadurch gekennzeichnet, daß** 0,1 bis 4,5 Mol-%, vorzugsweise 0,5 bis 2 Mol-%, des Palladiumkatalysators, bezogen auf 100 Mol-% des Bromfluorbenzols der Formel (V), eingesetzt werden.

4. Verfahren nach mindestens einem der Ansprüche 1 bis 3, **dadurch gekennzeichnet, daß** die Base Triethylamin, Na-Acetat, K-Acetat, ein Alkali- oder Erdalkalicarbonat ist.

5. Verfahren nach mindestens einem der Ansprüche 1 bis 4, **dadurch gekennzeichnet, daß** die Umsetzung des Bromfluorbenzols mit der Verbindung der Formel (IVa) oder (IVb) bei einer Temperatur von 80 bis 150°C, vorzugsweise 95 bis 120°C, durchgeführt wird.

6. Verfahren nach mindestens einem der Ansprüche 1 bis 5, **dadurch gekennzeichnet, daß** die Umsetzung in dem polar-aprotischen Lösungsmittel in einem Ether, bevorzugt in Tetrahydrofuran, bei einer Temperatur von -5 bis +50°C, bevorzugt -5 bis +23°C durchgeführt wird.

7. Verbindung der Formel (I) 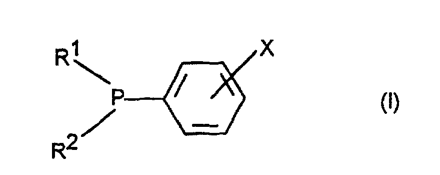 worin
X eine Gruppe der Formel (la) ist 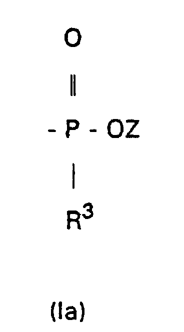
worin
Z Wasserstoff, ein Alkalimetall, das stöchiometrische Äquivalent eines Erdalkalimetalls, ein Ammoniumion, ein Mono-, Di-, Tri- oder Tetraalkylammonium oder ein Rest R⁴ ist, wobei R⁴ ein C₁-C₃₀-Alkylrest ist; und
R³ ein geradkettiger oder verzweigter C₁-C₄-Alkylrest ist;
R¹ und R² gleich oder verschieden sind und einen geradkettigen, verzweigten oder cyclischen C₁-C₃₀-Alkylrest oder C₆-C₁₀-Arylrest, der unsubstituiert oder durch ein bis fünf C₁-C₃-Alkylreste substituiert ist, oder R¹ und R² zusammen mit dem dreiwertigen P-Atom ein Dibenzophospholyl der Formel 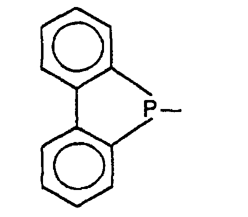 oder ein 3,4-Dimethylphospholyl der Formel 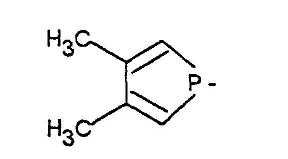 bilden.

8. Verbindung nach Anspruch 7, **dadurch gekennzeichnet, daß**
Z H⁺, Na⁺, K⁺, Mg²⁺/2, Ca²⁺/2, NH₄⁺, Mono-, Di-, Tri- oder Tetra-(C₁-C₄)-alkylammonium, Methyl, Ethyl, n-Propyl, iso-Propyl, n-Butyl, iso-Butyl oder tert.-Butyl,
R³ Methyl oder Ethyl; und
R¹ und R² jeweils Methyl, Cyclohexyl oder Phenyl bedeuten.

9. Verbindung nach Anspruch 7 oder 8, **dadurch gekennzeichnet, daß** die Verbindung der Formel (I) die freie Säure, das Natriumsalz oder der Isobutylester der (4-Diphenylphosphino-phenyl)-methyl-phosphinsäure, der (3-Diphenylphosphino-phenyl)-methyl-phosphinsäure oder der (2-Diphenylphosphino-phenyl)-methyl-phosphinsäure ist.

10. (4-Diphenylphosphino-phenyl)-methyl-phosphinsäure-Na-salz.

11. Verwendung einer Verbindung gemäß einem der Ansprüche 7 bis 10 als Katalysatorbestandteil in Übergangsmetallkomplex-katalysierten C-C-Verknüpfungsreaktionen.

## Claims

1. A process for preparing a tertiary phosphine of the formula (I) 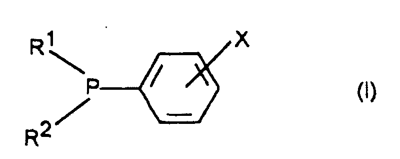 in which
X is a group of the formulae (Ia) or (Ib), 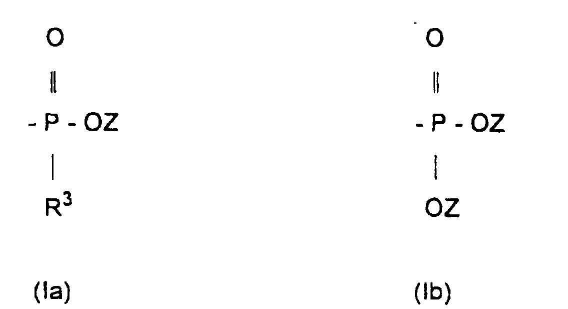 where
Z is hydrogen, an alkali metal, the stoichiometric equivalent of an alkaline earth metal, an ammonium ion, a mono-, di-, tri- or tetraalkylammonium ion or a radical R⁴, where R⁴ is a C₁-C₃₀-alkyl radical; and
R³ is a linear or branched C₁-C₄-alkyl radical;
R¹ and R² are identical or different and are each a linear, branched or cyclic C₁-C₃₀-alkyl radical or C₆-C₁₀-aryl radical which is unsubstituted or mono-substituted to pentasubstituted by C₁-C₃-alkyl radicals, or R¹ and R² together with the trivalent P atom form a dibenzophospholyl of the formula 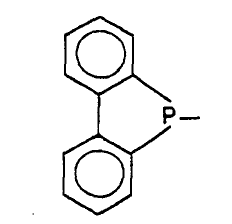 or a 3,4-dimethylphospholyl of the formula 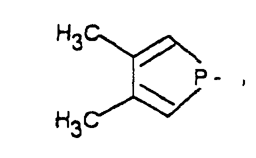 which comprises reacting, in the presence of a phosphine-containing palladium catalyst and a base, a bromofluorobenzene of the formula (V) 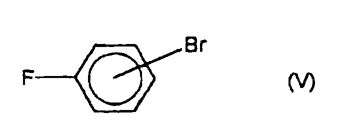 either with a (C₁-C₄)-alkyl (C₁-C₄)-alkylphosphonous acid ester of the formula (IVa) to give a (C₁-C₄)-alkyl fluorophenylphosphinate of the formula (IIIa) 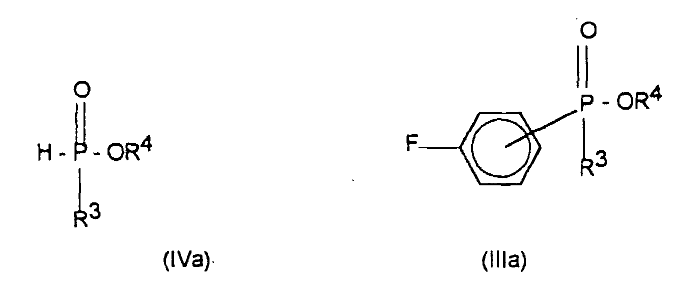 or with a di-(C₁-C₄)-alkyl phosphite ester of the formula (IVb) to give a di-(C₁-C₄)-alkyl fluorophenylphosphonate of the formula (IIIb) 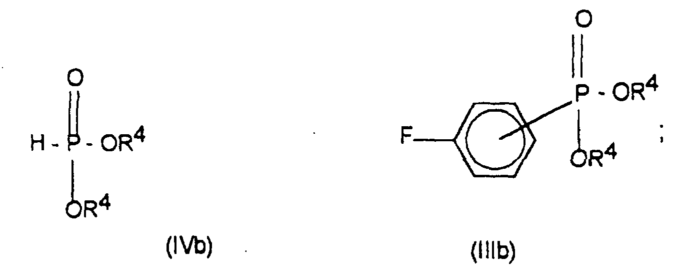 reacting the compound of the formula (IIIa) or the formula (IIIb) with an alkali metal phosphide or alkaline earth metal phosphide of the formula (II) 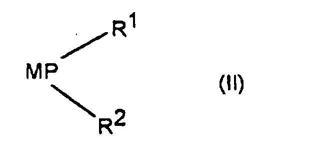 in which M is an alkali metal or the stoichiometric equivalent of an alkaline earth metal, in a polar aprotic solvent, to give a tertiary phosphinylphosphinate of the formula (Ic) or to give a tertiary phosphinylphosphonate of the formula (Id) 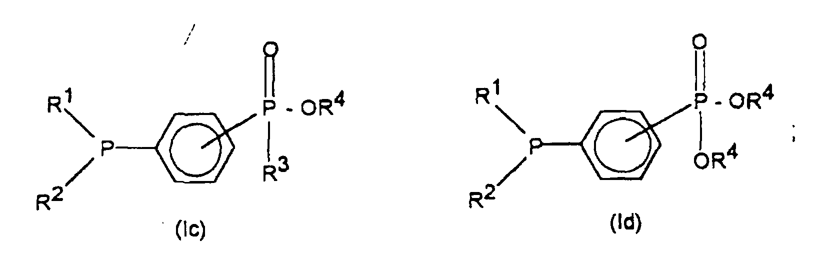 optionally saponifying the tertiary phosphinylphosphinate or the tertiary phosphinylphosphonate, with the salt-like compounds of the formulae (Ia) or (Ib) where Z is alkali metal, the stoichiometric equivalent of an alkaline earth metal, ammonium ion or mono-, di-, tri- or tetraalkylammonium ion being formed; and
optionally adding a mineral acid to the salt-like compounds of the formula (la) or (Ib), so that the free acids of the compounds of the formulae (la) or (Ib) where Z is hydrogen are formed.

2. The process as claimed in claim 1, wherein the phosphine-containing palladium catalyst comprises triphenylphosphine and Pd(II) chloride, Pd(II) acetate or Pd(O) bis(dibenzylideneacetone).

3. The process as claimed in claim 1 or 2, wherein 0.1 to 4.5 mol%, preferably 0.5 to 2 mol%, of the palladium catalyst, based on 100 mol% of the bromofluorobenzene of the formula (V), are used.

4. The process as claimed in at least one of claims 1 to 3, wherein the base is triethylamine, sodium acetate, potassium acetate, an alkali metal carbonate or an alkaline earth metal carbonate.

5. The process as claimed in at least one of claims 1 to 4, wherein the bromofluorobenzene is reacted with the compound of the formula (IVa) or (IVb) at a temperature of 80 to 150°C, preferably 95 to 120°C.

6. The process as claimed in at least one of claims 1 to 5, wherein the reaction in the polar aprotic solvent is carried out in an ether, preferably in tetrahydrofuran, at a temperature of -5 to +50°C, preferably -5 to +23°C.

7. A compound of the formula (I) 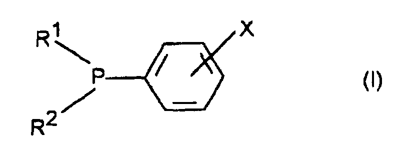 in which
X is a group of the formula (la) 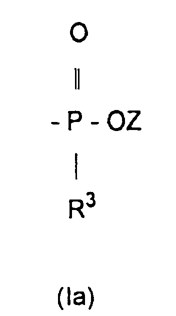 in which
Z is hydrogen, an alkali metal, the stoichiometric equivalent of an alkaline earth metal, an ammonium ion, a mono-, di-, tri- or tetraalkylammonium or a radical R⁴, where R⁴ is a C₁-C₃₀-alkyl radical; and
R³ is a linear or branched C₁-C₄-alkyl radical;
R¹ and R² are identical or different and are each a linear, branched or cyclic C₁-C₃₀-alkyl radical or C₆-C₁₀-aryl radical which is unsubstituted or mono-substituted to penta- substituted by C₁-C₃-alkyl radicals, or R¹ and R² together with the trivalent P atom form a dibenzophospholyl of the formula 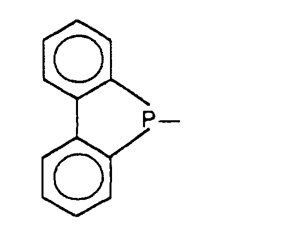 or a 3,4-dimethylphospholyl of the formula

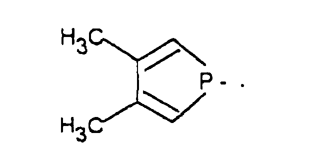

8. A compound as claimed in claim 7, wherein
Z is H⁺, Na⁺, K⁺, Mg²⁺/2, Ca²⁺/2, NH₄⁺, mono-, di-, tri- or tetra-(C₁-C₄)-alkylammonium, methyl, ethyl, n-propyl, isopropyl, n-butyl, isobutyl or tert-butyl;
R³ is methyl or ethyl; and
R¹ and R² are each methyl, cyclohexyl or phenyl.

9. A compound as claimed in claim 7 or 8, wherein the compound of the formula (I) is the free acid, the sodium salt or the isobutyl ester of (4-diphenylphosphinophenyl)methylphosphinic acid, of (3-diphenylphosphinophenyl)methylphosphinic acid or of (2-diphenylphosphinophenyl)methylphosphinic acid.

10. Sodium (4-diphenylphosphinophenyl)methylphosphinate.

11. The use of a compound as claimed in one of claims 7 to 10 as a catalyst constituent in transition-metal-complex-catalyzed C-C linking reactions.

## Revendications

1. Procédé de préparation d'un phosphane tertiaire de formule (I) 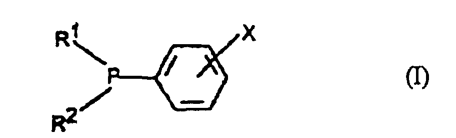 dans laquelle
X représente un groupe de formule (Ia) ou (Ib) 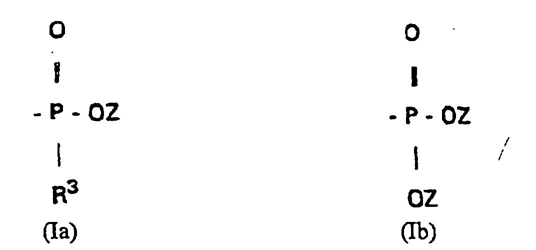 dans lesquelles
Z représente un atome d'hydrogène, un métal alcalin, l'équivalent stoechiométrique d'un métal alcalino-terreux, un ion ammonium, un ion mono-, di-, tri- ou tétraalkylammonium ou un reste R⁴, R⁴ étant un reste alkyle en C₁-C₃₀; et
R³ représente un reste alkyle en C₁-C₄ linéaire ou ramifié;
R¹ et R² sont identiques ou différents et représentent un reste alkyle en C₁-C₃₀ linéaire, ramifié ou cyclique ou un reste aryle en C₆-C₁₀ non substitué ou substitué par 1 à 5 restes alkyle en C₁-C₃, ou R¹ et R² forment ensemble, avec l'atome P trivalent un groupe dibenzophospholyle de formule 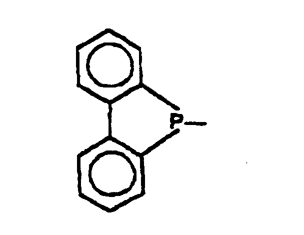 ou un reste 3,4-diméthylphospholyle de formule 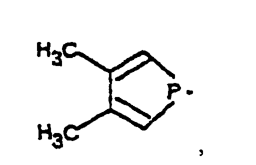 **caractérisé en ce que** l'on fait réagir un bromofluorobenzène de formule (V) 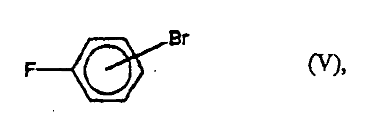 en présence d'un catalyseur à base de palladium contenant un phosphane et d'une base,
soit avec un (alkyl en C₁-C₄)phosphonite d'alkyle en C₁-C₄ de formule (IVa) pour obtenir un fluorophénylphosphinate d'alkyle en C₁-C₄ de formule (IIIa) 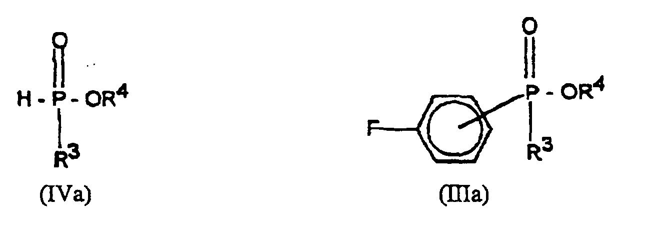 soit avec un phosphite de di(alkyle en C₁-C₄) de formule (IVb) pour obtenir un ester fluorophénylphosphonate de di(alkyle en C₁-C₄) de formule (IIIb) 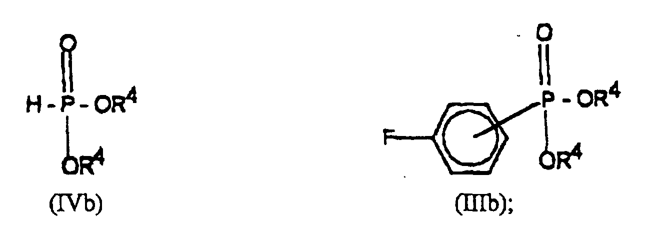 on fait réagir le composé de formule (IIIa) ou de formule (IIIb) dans un solvant aprotique polaire avec un phosphure de métal alcalin ou de métal alcalino-terreux de formule (II) 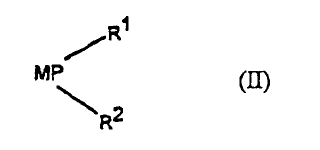 dans laquelle M représente un métal alcalin ou l'équivalent stoechiométrique d'un métal alcalino-terreux, pour obtenir un phosphanyl-phosphinate tertiaire de formule (Ic) ou un phosphanyl-phosphonate tertiaire de formule (Id) 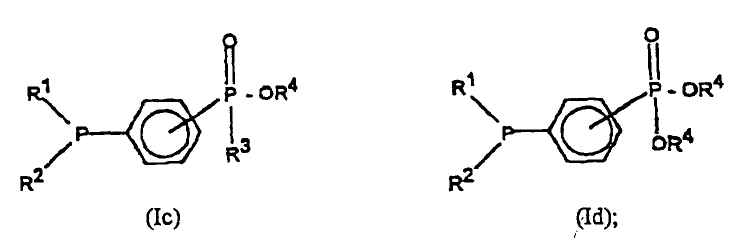 on saponifie éventuellement le phosphanyl-phosphinate tertiaire ou le phosphanyl-phosphonate tertiaire, grâce à quoi il se forme les composés de type sel de formule (Ia) ou (Ib) dans lesquels Z représente un métal alcalin, l'équivalent stoechiométrique d'un métal alcalino-terreux, un ion ammonium ou un ion mono-, di-, tri- ou tétraalkylammonium; et
on ajoute éventuellement un acide inorganique aux composés de type sel de formule (Ia) ou (Ib) de façon à former les acides libres des composés de formule (Ia) ou (Ib) dans lesquels Z représente un atome d'hydrogène.

2. Procédé selon la revendication 1, **caractérisé en ce que** le catalyseur à base de palladium contenant un phosphane est constitué de triphénylphosphane et de chlorure de Pd (II), d'acétate de Pd (II) ou de bis(dibenzylidène-acétone)Pd (0).

3. Procédé selon la revendication 1 ou 2, **caractérisé en ce que** l'on utilise 0,1 à 4,5 % en mol, de préférence 0,5 à 2 % en mol, du catalyseur à base de palladium, pour 100 % en mol du bromofluorobenzène de formule (V).

4. Procédé selon au moins l'une des revendications 1 à 3, **caractérisé en ce que** la base est la triéthylamine, l'acétate de sodium, l'acétate de potassium ou un carbonate de métal alcalin ou de métal alcalino-terreux.

5. Procédé selon au moins l'une des revendications 1 à 4, **caractérisé en ce que** la réaction du bromofluorobenzène avec le composé de formule (IVa) ou (IVb) s'effectue à une température de 80 à 150°C, de préférence de 95 à 120°C.

6. Procédé selon au moins l'une des revendications 1 à 5, **caractérisé en ce que** la réaction dans le solvant aprotique polaire s'effectue dans un éther, de préférence dans le tétrahydrofurane, à une température comprise entre -5 et +50°C, de préférence entre -5 et +23°C.

7. Composé de formule (I) 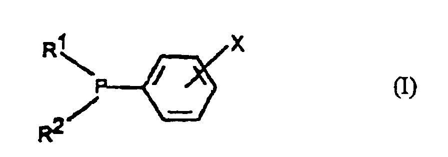 dans laquelle
X représente un groupe de formule (Ia)) 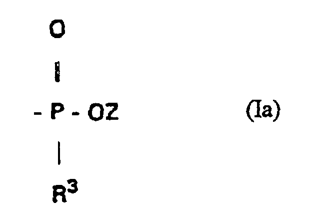 dans laquelle
Z représente un atome d'hydrogène, un métal alcalin, l'équivalent stoechiométrique d'un métal alcalino-terreux, un ion ammonium, un ion mono-, di-, tri- ou tétraalkylammonium ou un reste R⁴, R⁴ étant un reste alkyle en C₁-C₃₀; et
R³ représente un reste alkyle en C₁-C₄ linéaire ou ramifié;
R¹ et R² sont identiques ou différents et représentent un reste alkyle en C₁-C₃₀ linéaire, ramifié ou cyclique ou un reste aryle en C₆-C₁₀ non substitué ou substitué par 1 à 5 restes alkyle en C₁-C₃, ou R¹ et R² forment ensemble, avec l'atome P trivalent, un groupe dibenzophospholyle de formule 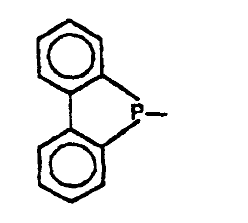 ou un reste 3,4-diméthylphospholyle de formule

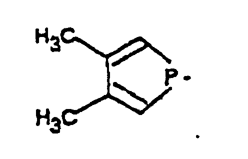

8. Composé selon la revendication 7, **caractérisé en ce que**
Z représente H⁺, Na⁺, K⁺, Mg²⁺/2, Ca²⁺/2, NH₄⁺, un ion mono-, di-, tri- ou tétra(alkyl en C₁-C₄)ammonium ou un reste méthyle, éthyle, n-propyle, isopropyle, n-butyle, isobutyle ou tert-butyle;
R³ est un reste méthyle ou éthyle; et
R¹ et R² sont chacun un reste méthyle, cyclohexyle ou phényle.

9. Composé selon la revendication 7 ou 8, **caractérisé en ce que** le composé de formule (I) est la forme acide libre, sel de sodium ou ester isobutylique de l'acide (4-diphénylphosphinophényl)-méthylphosphinique, de l'acide (3-diphénylphosphinophényl)-méthylphosphinique ou de l'acide (2-diphénylphosphinophényl)-méthylphosphinique.

10. Sel de sodium de l'acide (4-diphénylphosphinophényl)méthylphosphinique.

11. Utilisation d'un composé selon l'une des revendications 7 à 10 comme constituant de catalyseur dans des réactions de formation de liaisons C-C catalysées par un complexe de métal de transition.
